# EUROPÄISCHE PATENTSCHRIFT

(11) **EP 0 439 805 B1**
(45) Veröffentlichungstag und Bekanntmachung des Hinweises auf die Patenterteilung: **10.08.1994**
(21) Anmeldenummer: 90125150.4
(22) Anmeldetag: 21.12.1990
(51) Int. Cl.: B01D 35/18

(54) **Vorrichtung zum Kühlen des Öls der hydraulischen Antriebseinrichtungen einer Kunststoff-Spritzgiessmaschine**
Oil-cooling device for hydraulic drive systems of a plastic material injection-moulding machine
Dispositif de refroidissement d'huile de moteurs hydrauliques d'un dispositif de moulage par injection de matière plastique

(30) Priorität: 31.01.1990 DE 4002739
(43) Veröffentlichungstag der Anmeldung: 07.08.1991
(73) Patentinhaber: Hehl, Karl, 72290 Lossburg (DE)
(72) Erfinder: Hehl, Karl, 72290 Lossburg (DE)
(74) Vertreter: Reinhardt, Harry

(56) Entgegenhaltungen:
- WO-A-82/04197
- DE-A- 3 400 883
- DE-A- 3 403 429
- DE-U- 8 809 456

## Beschreibung

Die Erfindung bezieht sich auf eine Vorrichtung entsprechend dem Oberbegriff des Patentanspruches 1.

Bei Kunststoff-Spritzgießmaschinen schwankt der Kühlbedarf für das Öl der hydraulischen Antriebseinrichtungen in weiten Grenzen. Dieser Kühlbedarf hängt nämlich nicht nur von der Größe der Spritzgießmaschine sondern auch von der Betriebsart und von den physikalischen Eigenschaften des verarbeiteten Materials und darüberhinaus auch noch von der Temperatur der umgebenden Atmosphäre ab. Eine entscheidende Rolle spielt dabei schließlich die oftmals sehr unterschiedliche Zulauftemperatur des Temperiermediums bzw. des Kühlwassers. Letztere kann z.B. in einem nicht klimatisierten Raum in den Tropen um 20° bis 30°C höher liegen als in einem nicht oder wenig beheizten Raum in Ländern mit rauhem Klima. Die bekannte, dem Oberbegriff entsprechende Einrichtung (DE 34 03 429 C2; DE-U 83 33 616.8) ist daher notwendigerweise für den maximalen Kühlbedarf ausgelegt, d.h. mit einer verhältnismäßig großen Reserve an Kühlleistung versehen. Da die Kühlleistung zum Teil auch eine Funktion der Größe der Vorrichtung ist, beansprucht diese daher auch einen relativ großen Raum an der Außenwand des Maschinenfußes der Spritzgießmaschine. Dies gilt insbesondere auch für die in Sp. 6, Zn. 26-34 der DE 34 03 429 C2 beschriebenen Variante.

Aus dem DE-U 88 09 456 ist ein Filtergerät bekannt, bei dem beliebig viele Filterkammern bausteinförmig aneinandergereiht werden können, um einen einzigen Filterblock zu bilden. Die einzelnen Filterkammern sind dabei über Querkanäle oder Abzweigkanäle miteinander verbunden, die durch Öffnungen in den Wandungen der Filter oder im Bereich der Filterdeckel gebildet sind. Sämtliche Filterkammern sind in einem gemeinsamen Gehäuse angeordnet, so daß zwar durch konstruktive Gestaltung vielen verschiedenen Anforderungen genügt werden kann, jedoch der grundsätzliche Aufbau des Filtergerätes für ungeschultes Personal nicht ohne weiteres durchschaubar ist. Durch die Anordnung der Filterkammern in einem gemeinsamen Filtergerät werden aber auch die Möglichkeiten für eine zusätzliche Außenkühlung durch die Verringerung der Oberfläche erheblich beeinträchtigt.

Der Erfindung liegt die Aufgabe zugrunde, eine Vorrichtung der eingangs genannten Gattung derart weiterzubilden, daß sie bei geringem Fertigungsaufwand und geringerem Raumbedarf auch von ungeschultem Personal besser an unterschiedliche Kühlerfordernisse anpaßbar ist.

Diese Aufgabe wird durch die im Patentanspruch 1 genannten Merkmale gelöst.

Bei einer solchen Ausbildung kann dem jeweils erforderlichen Kühlbedarf durch Verdoppelung bzw. Vervielfachung einer durch eine Kühlerfiltereinheit gegebene Grundstufe Rechnung getragen werden, ohne daß die Fertigungskosten nennenswert erhöht wären. Ist nämlich eine Gesamtkühlleistung erforderlich, welche annäherungsweise dem Zwei- oder Mehrfachen einer Kühlerfiltereinheit entspricht, so kann die erforderliche Anzahl von Einheiten mittels des Verbindungsblockes zu einer hydraulischen Einheit zusammengefaßt werden. Fertigung und Lagerhaltung kann also auf der Grundlage eines Bauteilsatzes erfolgen, der identische Kühlerfiltereinheiten der Grundstufe, Verbindungsblöcke und Anschlußblöcke umfaßt.

Ein wesentlicher Vorteil der erfindungsgemäßen Ausbildung besteht darin, daß die Vorrichtung z.B. an einem entlegenen Standort, der vom regulären Service nicht oder nur mit großem Aufwand erreichbar ist, auch von wenig geschultem Personal nachträglich an Kühlerfordernisse angepaßt werden kann, die zunächst nicht erkennbar waren. Dank des niedrigen Gewichtes und des geringen Raumbedarfs der flachen Verbindungsblöcke, kann deren Transport zum Einsatzort erforderlichenfalls auch auf postalischem Wege erfolgen.

Nachstehend wird die Erfindung anhand der Zeichnung an zwei Ausführungsbeispielen erläutert.

Es zeigen:
- Fig. 1: Die Vorrichtung mit einer einzigen Kühlerfiltereinheit im Schnitt nach Linie I-I von Fig. 2,
- Fig. 2: die Vorrichtung gemäß Fig. 1 im Schnitt nach Linie II-II von Fig. 1,
- Fig. 3, 4: die Vorrichtung mit zwei Kühlerfiltereinheiten in einer den Fig. 1, 2 entsprechenden Darstellung,
- Fig. 5: das Verbindungsstück im Schnitt nach Linie V-V von Figur 6,
- Fig. 6: das Verbindungsstück im Schnitt nach Linie VI-VI von Fig. 8,
- Fig. 7: das Verbindungsstück im Schnitt nach Linie VII-VII von Figur 6 und
- Fig. 8: das um 90° gedrehte Verbindungsstück gemäß Fig. 6.

Die Vorrichtung kühlt das Öl der hydraulischen Antriebseinrichtungen einer Kunststoff-Spritzgießmaschine mittels Wasser. Darüber hinaus wird das gekühlte Öl durch Filtration gereinigt. Die Vorrichtung umfaßt wenigstens eine Kühler-Filter-Einheit, wie sie in der DE-34 03 429 C2 offenbart ist. Die Vorrichtung ist aus einem Satz von Bauteilen (Bauteilesatz) bedarfsweise für unterschiedliche Kühlstufen aufbaubar. Diese Kühlstufen stellen eine Kühlleistung bereit, die das Ein-, Zwei- oder Dreifache einer Grundstufe beträgt. Der Bauteilesatz umfaßt, für die Grundstufe ausgelegte, Kühler-Filter-Einheiten E, die je mit einem Anschlußteil 10a versehen sind, ferner Anschlußblöcke, die innerhalb des Tankraumes der Kunststoff-Spritzgießmaschine anzuordnen sind, ferner zwischen den Anschlußteilen von zwei oder mehr Kühler-Filter-Einheiten E einer Vorrichtung und wenigstens einem Anschlußblock 15 im Tankraum T einfügbare Verbindungsblöcke 18. Diese sind dazu bestimmt und geeignet, Zuflußkanalabschnitte 16 in den Anschlußteilen 10a mit dem Zuflußkanalabschnitt 16' eines Anschlußblockes 15 mittels eines Zufluß-Querkanals 16'' zu verbinden. Diese sind ferner dazu bestimmt, Abflußkanalabschnitte 17 der Anschlußteile 10a mit einem Abflußkanalabschnitt 17' des Anschlußblockes 15 mittels eines Abfluß-Querkanales 17'' zu verbinden. Die Verbindungsblöcke werden weiter unten im einzelnen beschrieben.

Da die Kühler-Filter-Einheit E als solche durch die DE 34 03 429 C2 an sich bekannt ist, genügt es im folgenden,auf ihre wesentlichen baulichen Merkmale, die im Oberbegriff des Anspruches 1 verankert sind, einzugehen. Die Kühler-Filter-Einheit umfaßt zwei koaxiale Leitrohre 10, 11 für das Öl. Im Ringraum (erster Ringraum R) zwischen den beiden Leitrohren 10, 11 ist ein spiralförmig gelegtes Kühlrohr 12 angeordnet. Aus der Wandung des metallenen Kühlrohres 12 ist zur Steigerung des Wärmeaustausches entlang einer Schraubenlinie ein Kühlflansch 12a herausgetrieben. Die Kühler-Filter-Einheit ist ferner mit einem vom inneren Leitrohr 11 umschlossenen Filtereinsatz 13 versehen. Ein weiterer Ringraum (zweiter Ringraum K) ist vom Filtereinsatz 13 und dem inneren Leitrohr 11 begrenzt. Das äußere Leitrohr ist mit einem Anschlußteil 10a mit Zentrieransatz 10a' versehen, welches Leitrohr 10 zugleich das Gehäuse für die Kühler-Filter-Einheit bildet und mit Kühlrippen 10c versehen ist. Das Anschlußteil 10a ist Bestandteil einer Einrichtung zur Befestigung der Vorrichtung an einer den Öl-Tankraum T der Kunststoff-Spritzgießmaschine begrenzenden Wand 14. Diese Einrichtung umfaßt ferner einen im Tankraum T angeordneten Anschlußblock 15. Der Anschlußblock 15 ist mittels Befestigungselementen 22 mit dem bzw. den Anschlußteilen 10a der Kühler-Filter-Einheit(en) verbunden, welche sich an der Außenseite der Wand 14 befinden. Anschlußteil 10a und Anschlußblock 15 weisen je koaxiale Kanalabschnitte 16, 17; 16', 17' auf, die an der Bildung eines Zulaufkanales 16, 16' und eines Ablaufkanales 17, 17' für das Öl teilhaben. Das Kühlwasser wird über den Anschluß 20 dem Kühlrohr 12 zugeführt und verläßt das Kühlrohr über den Anschluß 20. Das zu kühlende Öl gelangt über die Zulaufleitungen 21 in den Zuflußkanalabschnitt 16' des Anschlußblockes 15 und von dort mittelbar (über den Verbindungsblock 18) oder unmittelbar in den Zuflußkanal-Abschnitt 16 des Anschlußteils 10a, der in einen Ringraum 23 unterhalb des Kühlrohres mündet, der seinerseits mit dem ersten Ringraum R in Verbindung steht. Dabei wird das Öl durch die zwischen den inneren Wandungen der Leitrohre 10, 11 und den Oberflächen von Kühlrohr und Kühlflansch verbleibenden Zwischenräumen nach oben hin durchgepreßt und gelangt nach einer im Gegenstrom-Prinzip erfolgten Kühlung in den zweiten Ringraum K. Im zweiten Ringraum K kann sich das Öl über die gesamte äußere Mantelfläche des Kühlereinsatzes verteilen. Das durch die zylindrische Wandung des Filtereinsatzes 13 in den Filter-Innenraum eindringende Öl wird beim Passieren der Wandung gefiltert und fließt über einen Ausflußstutzen in den Abflußkanalabschnitt 17 im Anschlußteil 10a. Von diesem gelangt das gekühlte und gereinigte Öl mittelbar (über das Verbindungsstück 18) oder unmittelbar in den Abflußkanalabschnitt 17' im Anschlußblock 15, um über den Abflußstutzen 15a zum Öl des Tankraumes zu gelangen.

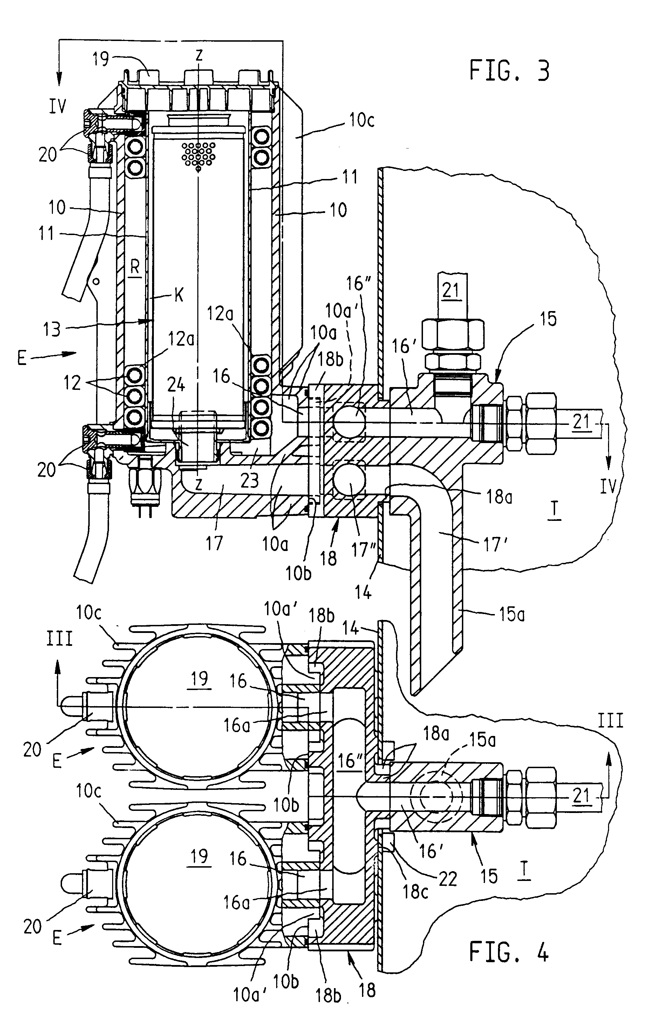

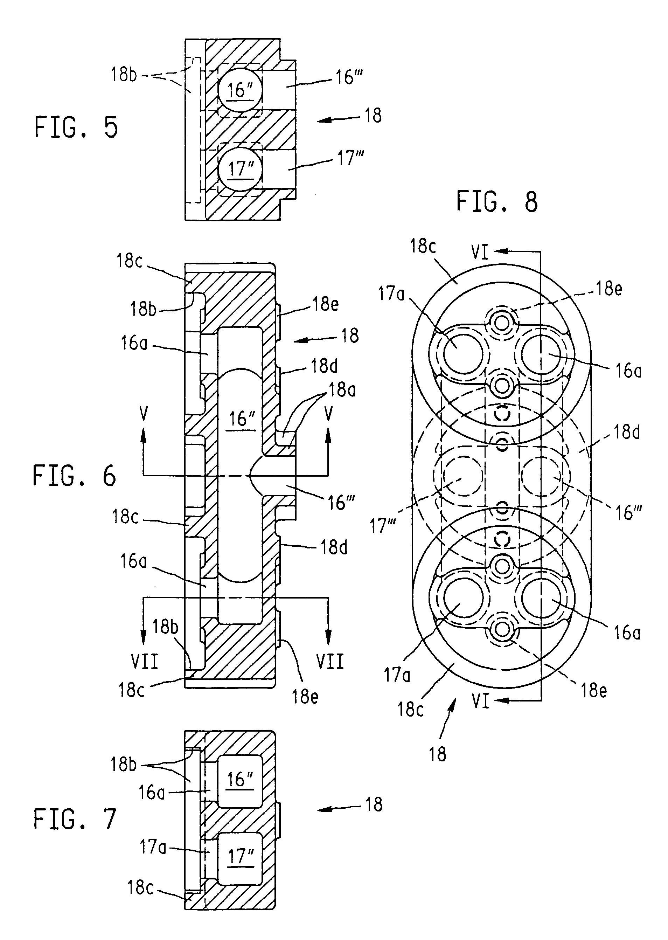

Im zeichnerisch dargestellten Ausführungsbeispiel ist der Verbindungsblock 18 für zwei Kühler-Filter-Einheiten E ausgelegt. Er ist daher zweiseitig-symmetrisch, wie insbesondere aus Fig. 4 ersichtlich. Der die beiden Zuflußkanalabschnitte in den Anschlußteilen 10a verbindende Zufluß-Querkanal 16'' kommuniziert mit dem Zuflußkanalabschnitt 16' eines einzigen Anschlußblockes 15. Der Verbindungsblock 18 weist einen einzigen, in eine ringförmige Ausnehmung der Wand 14 eingreifenden Zentrieransatz 18a auf. Dieser ist mit den Zentrieransatz 10a' des Anschlußteiles 10a jeder Kühler-Filter-Einheit E identisch. Der Verbindungsblock 18 weist eine der Anzahl der Kühler-Filter-Einheiten E entsprechende Anzahl von ringförmigen Zentrierschultern 18b zur zentrierenden Aufnahme der Zentrieransätze 10a' der Anschlußteile 10a auf. Im Ausführungsbeispiel sind die beiden Kühler-Filter-Einheiten E über ringförmige Stützflächen 10b an der Wand 14 bzw. an ringförmigen Anlageflächen 18c des Verbindungsblockes 18 abstützbar. Dieser liegt seinerseits über eine ringförmige Abstützfläche 18d zur Abstützung der Vorrichtung an der Wand 14 an. Der horizontale Zufluß-Querkanal 16'' und der unter diesem verlaufende Abfluß-Querkanal 17'' des Verbindungsblockes 18 kommuniziert über Anschlußkanäle 16a, 17a mit den Kanalabschnitten 16, 17 jedes Anschlußteiles 10a. Die Anschlußkanäle 16a, 17a weisen eine Länge auf, welche der Tiefe der Zentrierschultern 18b entspricht. Der Zufluß-Querkanal 16'' und der Abfluß-Querkanal 17'' steht je über einen einzigen Anschlußkanal 16''' bzw. 17''' mit dem koaxialen Kanalabschnitt 16' bzw. 17' im Anschlußblock 15 in Verbindung. Wie insbesondere aus den Fig. 5-8 ersichtlich, weisen der Zuflußquerkanal 16'' und der Abfluß-querkanal 17'' je einen Mittelabschnitt von kreisrundem Querschnitt und Endabschnitte von viereckigem Querschnitt auf. Zuflußkanal 16, 16' und Abflußkanal 17, 17' stehen bei senkrecht verlaufender Symmetrieachse z-z des Filtereinsatzes 13 senkrecht zur Wand 14 des Öl-Tankraumes T und senkrecht zum Zu- und Abfluß-Querkanal 16''; 17''. Das als Gehäuse für die Kühler-Filter-Einheit dienende äußere Leitrohr 10 mit Kühlrippen 10c und mit Anschlußteilen 10a sowie der Verbindungsblock 18 ist je durch ein im Druckgußverfahren aus Aluminium hergestelltes Formstück gebildet. Das Anschlußblock 15 ist ein Grauguß-Formstück mit Abflußstutzen 15a.

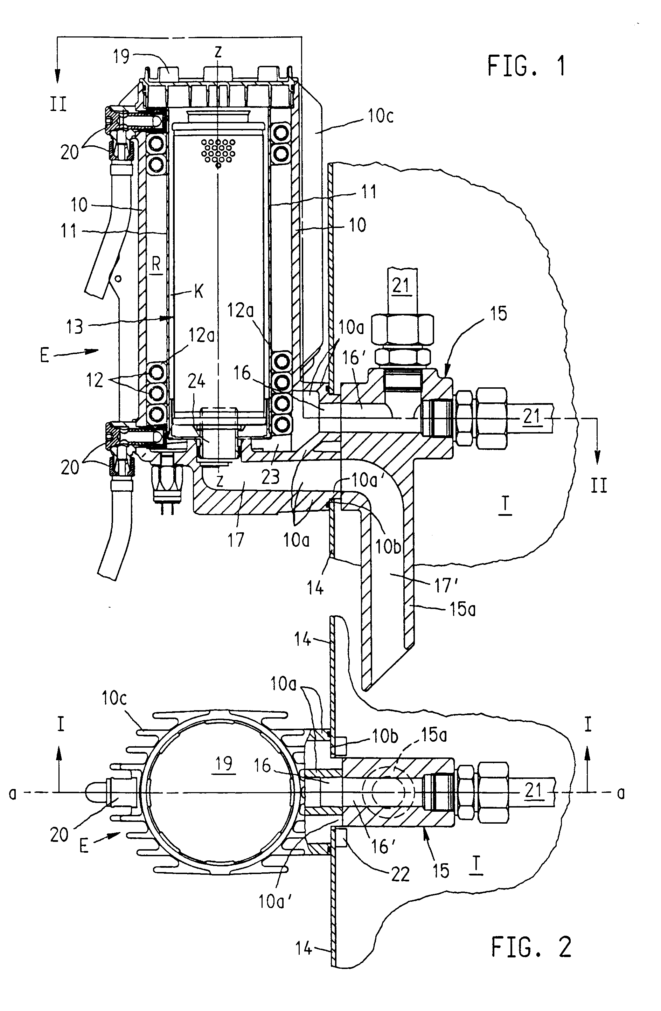

Wie aus den Figuren 1-4 erkennbar, sind die Stützflächen 10b der Anschlußteile 10a mit Ringdichtungen versehen.

## Patentansprüche

1. Vorrichtung zum Kühlen des Öls der hydraulischen Antriebseinrichtungen einer Kunststoff-Spritzgießmaschine mittels Wasser und zum Reinigen des Öls durch Filtration, mit zwei koaxialen Leitrohren (10,11) für das Öl, mit wenigstens einem Kühlrohr (12) in einem Ringraum (erster Ringraum R) zwischen den Leitrohren (10,11) und mit einem vom inneren Leitrohr (11) umschlossenen Filtereinsatz (13) sowie mit einem vom Filtereinsatz (13) und dem inneren Leitrohr (11) begrenzten weiteren Ringraum (zweiter Ringraum K), in welchen das aus dem ersten Ringraum (R) kommende Öl zur Filtration einströmt, und mit einer Einrichtung zur Befestigung der Vorrichtung an einer den Öl-Tankraum (T) der Kunststoff-Spritzgießmaschine begrenzenden Wand (14), welche Einrichtung wenigstens ein mit Zentrieransatz versehenes, an der Außenseite der Wand (14) angeordnetes Anschlußteil (10a) am äußeren Leitrohr (10) und einen im Tankraum (T) angeordneten, Anschlußblock (15) aufweist, wobei Anschlußteil (10a) und Anschlußblock (15) je koaxiale Kanalabschnitte (16,17;16',17') aufweisen, die einen Zulaufkanal (16,16') und einen Ablaufkanal (17,17') für das Öl bilden, dadurch gekennzeichnet, daß die Vorrichtung wenigstens zwei für eine Grundstufe ausgelegte, entsprechend der dem Oberbegriff entsprechenden Vorrichtung aufgebaute, je mit Anschlußteil (10a) versehene Kühlerfiltereinheiten (E) aufweist, die über wenigstens einen zwischen Anschlußteilen und Anschlußblock (15) einfügbaren Verbindungsblock (18) verbindbar sind, der die Zu- und Abflußkanalabschnitte (16,17) der Anschlußteile (10a) mit den Zu- und Abflußkanalabschnitten (16',17') des Anschlußblockes (15) mittels eines Zuflußquerkanales (16'') und eines Abflußquerkanales (17'') verbindet und vor der Außenwand angeordnet ist.

2. Vorrichtung nach Anspruch 1, dadurch gekennzeichnet, daß der Zuflußquerkanal (16'') mit dem Zuflußkanalabschnitt (16') eines einzigen Anschlußblockes (15) kommuniziert.

3. Vorrichtung nach Anspruch 1 oder 2, dadurch gekennzeichnet, daß die Verbindungsblöcke (18) je einen einzigen, in eine ringförmige Ausnehmung der Wand (14) eingreifenden Zentrieransatz (18a) aufweisen, der mit dem Zentrieransatz (10a') des Anschlußteiles (10a) identisch ist.

4. Vorrichtung nach Anspruch 3, dadurch gekennzeichnet, daß die Verbindungsblöcke (18) je eine der Anzahl der Kühlerfiltereinheiten (E) entsprechende Anzahl von ringförmigen Zentrierschultern (18b) zur zentrierenden Aufnahme der Zentrieransätze (10a') der Anschlußteile (10a) aufweisen.

5. Vorrichtung nach einem der vorhergehenden Ansprüche, dadurch gekennzeichnet, daß die Kühlerfiltereinheiten (E) über ringförmige Stützflächen (10b) an der Wand (14 in Fig. 1,2) bzw. an ringför- migen Anlageflächen (18c) des Verteilerblockes (18) abstützbar sind, der seinerseits über eine ringförmige Abstützfläche (18d) zur Abstützung der Vorrichtung an der Wand (14) anliegt.

6. Vorrichtung nach einem der vorhergehenden Ansprüche, dadurch gekennzeichnet, daß der Zuflußquerkanal (16'') und der Abflußquerkanal (17'') je über einen einzigen Anschlußkanal (16''') bzw. (17''') mit den Kanalabschnitten (16',17') in Verbindung steht.

7. Vorrichtung nach einem der vorhergehenden Ansprüche, dadurch gekennzeichnet, daß der Zuflußquerkanal (16'') und der Abflußquerkanal (17'') je einen Mittelabschnitt von kreisrundem Querschnitt und Endabschnitte von viereckigem Querschnitt aufweisen.

8. Vorrichtung nach einem der vorhergehenden Ansprüche, dadurch gekennzeichnet, daß Zuflußkanal (16,16') und Abflußkanal (17,17') bei senkrecht verlaufender Symmetrieachse (z-z) des Filtereinsatzes (13) senkrecht zur Wand des Öl-Tankraumes (T) und senkrecht zum Zu- und Abflußquerkanal (16'', 17'') stehen.

9. Vorrichtung nach einem der vorhergehenden Ansprüche, dadurch gekennzeichnet, daß das als Gehäuse für die Kühlerfiltereinheit dienende Leitrohr (10) mit Kühlrippen (10c) und mit Anschlußteil (10a) und der Verbindungsblock (18) je durch ein im Druckgußverfahren aus Aluminium hergestelltes Formstück gebildet sind und daß der Anschlußblock (15) ein Grauguß-Formstück ist.

## Claims

1. Device for cooling the oil of the hydraulic drive arrangements of a plastics injection-moulding machine by means of water, and for cleaning the oil by filtration, with two coaxial guide tubes (10, 11) for the oil, with at least one cooling tube (12) in an annular space (first annular space R) between the guide tubes (10, 11) and with a filter insert (13) surrounded by the inner guide tube (11), and with, defined by the filter insert (13) and the inner guide tube (11), a further annular space (second annular space K) into which there flows for filtration the oil coming out of the first annular space (R), and with an arrangement for attaching the device to a wall (14) defining the oil reservoir space (T) of the plastics injection-moulding machine, said arrangement having at least one linkage part (10a), provided with a centring projection and disposed on the external side of the wall (14), on the outer guide tube (10), and a linkage block (15) disposed in the reservoir space (T), the linkage part (10a) and the linkage block (15) each having coaxial duct portions (16, 17; 16', 17') which form a feed duct (16, 16') and an outflow duct (17, 17') for the oil, characterised in that the device has at least two cooler filter units (E), designed as a basic stage, built up in accordance with the device according to the preamble, and each provided with a linkage part (10a), said filter cooler units (E) being interconnectable via at least one connector block (18) insertable between the linkage parts and the linkage block (15), said connector block (18) connecting the feed and outflow duct portions (16, 17) of the linkage parts (10a) to the feed and outflow duct portions (16', 17') of the linkage block (15) by means of a feed transverse duct (16'') and of an outflow transverse duct (17''), and is disposed in front of the external wall.

2. Device according to claim 1, characterised in that the feed transverse duct (16'') communicates with the feed duct portion (16') of a single linkage block (15).

3. Device according to claim 1 or 2, characterised in that the connector blocks (18) each have a single centring projection (18a) engaging in an annular recess in the wall (14), and which is identical with the centring projection (10a') of the linkage part (10a).

4. Device according to claim 3, characterised in that the connector blocks (18) each have a number of annular centring shoulders (18b), corresponding to the number of cooler filter units (E), for centred reception of the centring projections (10a') of the linkage parts (10a).

5. Device according to one of the preceding claims, characterised in that the cooler filter units (E) may be supported via annular support surfaces(10b) on the wall (14 in Figs. 1, 2) or on annular contact surfaces (18c) of the distributor block (18), which in turn abuts via an annular support surface (18d) on the wall (14) in order to support the device.

6. Device according to one of the preceding claims, characterised in that the feed transverse duct (16'') and the outflow transverse duct (17'') each communicate via a single linkage duct (16''') or (17''') with the duct portions (16', 17').

7. Device according to one of the preceding claims, characterised in that the feed transverse duct (16'') and the outflow transverse duct (17'') each have a central portion with circular cross-section, and terminal portions with square cross-section.

8. Device according to one of the preceding claims, characterised in that the feed duct (16, 16') and the outflow duct (17, 17'), with a vertically-extending axis of symmetry (z-z) of the filter insert (13), stand vertical to the wall of the oil reservoir space (T) and vertical to the feed and outflow transverse ducts (16'', 17'').

9. Device according to one of the preceding claims, characterised in that the guide tube (10) serving as a casing for the cooler filter unit with cooling ribs (10c), and with linkage part (10a), and the connector block (18) are each formed by a moulded part manufactured from aluminium by extrusion moulding, and in that the linkage block (15) is a cast iron moulded part.

## Revendications

1. Dispositif pour refroidir au moyen d'eau l'huile des dispositifs hydrauliques d'entraînement d'une machine de moulage de matière plastique par injection et pour purifier l'huile par filtrage, comprenant deux conduits coaxiaux (10), 11) destinés à l'huile, comprenant au moins un tube de refroidissement (12) dans un espace annulaire (premier espace annulaire R) ménagé entre les conduits (10, 11), comprenant une cartouche de filtrage (13) qui est entourée par le conduit intérieur (11), ainsi qu'un autre espace annulaire (deuxième espace annulaire K) qui est délimité par la cartouche de filtrage (13) et par le conduit intérieur (11) et dans lequel l'huile provenant du premier espace annulaire (R) s'écoule pour être filtrée, et comprenant un système pour fixer le dispositif à une paroi (14) qui délimite le réservoir d'huile (T) de la machine de moulage de matière plastique par injection, ce système comportant sur le conduit extérieur (10) au moins une partie de raccordement (10a) qui est pourvue d'un embout de centrage et qui est disposée sur le côté extérieur de la paroi (14), ainsi qu'un bloc de raccordement (15) qui est disposé dans le réservoir (T), cependant que la partie de raccordement (10a) et le bloc de raccordement (15) comportent chacun des parties de canaux coaxiales (16, 17 ; 16', 17') qui constituent pour l'huile un canal d'amenée (16, 16') et un canal d'évacuation (17, 17'), caractérisé par le fait que le dispositif comprend au moins deux unités (E) de filtrage et de refroidissement qui sont conçues pour un niveau de base, qui sont construites en correspondant au dispositif selon le préambule, qui sont pourvues chacune d'une partie de raccordement (10a) et qui peuvent être reliées par l'intermédiaire d'au moins un bloc de liaison (18), cependant que ce dernier peut être inséré entre les parties de raccordement et le bloc de raccordement (15), qu'il relie les parties de canaux d'amenée et d'évacuation (16, 17) des parties de raccordement (10a) aux parties de canaux d'amenée et d'évacuation (16', 17') du bloc de raccordement (15) au moyen d'un canal transversal d'amenée (16'') et d'un canal transversal d'évacuation (17''), et qu'il est disposé devant la paroi extérieure.

2. Dispositif selon la revendication 1, caractérisé par le fait que le canal transversal d'amenée (16'') communique avec la partie de canal d'amenée (16') d'un bloc de raccordement unique (15).

3. Dispositif selon la revendication 1 ou 2, caractérisé par le fait que les blocs de liaison (18) comportent chacun un embout de centrage unique (18a) qui pénètre dans un évidement annulaire de la paroi (14) et qui est identique à l'embout de centrage (10a') de la partie de raccordement (10a).

4. Dispositif selon la revendication 3, caractérisé par le fait qu'en vue de recevoir d'une manière centrée les embouts de centrage (10a') des parties de raccordement (10a), les blocs de liaison (18) comportent chacun un nombre d'épaulements de centrage annulaires (18b) qui correspond au nombre des unités (E) de filtrage et de refroidissement.

5. Dispositif selon l'une des revendications précédentes, caractérisé par le fait que les unités (E) de filtrage et de refroidissement peuvent être appuyées sur la paroi (14 sur les figures 1 et 2) par l'intermédiaire de surfaces d'appui annulaires (10b), ou, respectivement, sur des surfaces d'appui annulaires (18c) du bloc répartiteur (18), celui-ci portant pour sa part sur la paroi (14) par l'intermédiaire d'une surface d'appui annulaire (18d), en vue de l'appui du dispositif.

6. Dispositif selon l'une des revendications précédentes, caractérisé par le fait que le canal transversal d'amenée (16'') et le canal transversal d'évacuation (17'') sont chacun en communication avec les parties de canal (16', 17') par l'intermédiaire d'un canal de raccordement unique (16''', respectivement 17''').

7. Dispositif selon l'une des revendications précédentes, caractérisé par le fait que le canal transversal d'amenée (16'') et le canal transversal d'évacuation (17'') comportent chacun une partie centrale à section transversale circulaire et des parties d'extrémité à section transversale carrée.

8. Dispositif selon l'une des revendications précédentes, caractérisé par le fait que les canaux d'amenée (16, 16') et les canaux d'évacuation (17, 17') sont perpendiculaires à la paroi du réservoir d'huile (T) et perpendiculaires aux canaux transversaux d'amenée et d'évacuation (16'', 17'') lorsque l'axe de symétrie (z-z) de la cartouche de filtrage (13) s'étend verticalement.

9. Dispositif selon l'une des revendications précédentes, caractérisé par le fait que le conduit (10) qui sert de carter à l'unité de filtrage et de refroidissement et qui est pourvu d'ailettes de refroidissement (10c) et de la partie de raccordement (10a), ainsi que le bloc de liaison (18), sont chacun constitués par une pièce moulée en aluminium fabriquée par coulée sous pression, et que le bloc de raccordement (15) est une pièce moulée en fonte grise.
